# EUROPÄISCHE PATENTANMELDUNG

(11) **EP 1 729 249 A1**
(43) Veröffentlichungstag der Anmeldung: **06.12.2006**
(21) Anmeldenummer: 05104813.0
(22) Anmeldetag: 02.06.2005
(51) Int. Cl.: G06Q 10/00

(54) **Verfahren zur automatisierten Erstellung und Bearbeitung eines Rechnungsdokuments**

(71) Anmelder: Weber, Jan Dr., 82319 Starnberg (DE)
(72) Erfinder: Weber, Jan Dr., 82319 Starnberg (DE)
(74) Vertreter: Esslinger, Alexander

(57) **Zusammenfassung**

Erfindungsgemäß wird ein Verfahren zur automatisierten Rechnungserstellung und -begleichung von einem Zahlungsschuldner (50) an einen Zahlungsempfänger (20) vorgeschlagen, aufweisend die Schritte der Erfassung der zur Ausführung des Zahlungsvorgangs zur Rechnungsbegleichung notwendigen Rechnungsdaten, Erstellung und Ausdrucken eines Rechnungsdokuments (10, 18), Anbringen eines Speicherelements (12) an dem Rechnungsdokument, Abspeichern der Rechnungsdaten in dem Speicherelement (12), Versenden des Rechnungsdokuments (10, 18) mit Speicherelement (12) an den Zahlungsschuldner (50), Auslesen der Rechnungsdaten von dem Speicherelement (12) durch ein Lesegerät (52), Übertragung der ausgelesenen Rechnungsdaten an ein automatisiertes Zahlungsverkehrssystem (30) und Ausführung des Zahlungsvorgangs an den Zahlungsempfänger (20) basierend auf den ausgelesenen Rechnungsdaten. Das erfindungsgemäße Verfahren erlaubt es, die für eine automatisierte Ausführung einer Zahlungstransaktion erforderlichen Daten auf einfache und kostengünstige Art und Weise zusammen mit einem gedruckten Rechnungsdokument zu übertragen.

## Beschreibung

### Hintergrund der Erfindung

Die manuelle Übertragung gedruckter oder geschriebener Inhalte in Computer oder andere, geeignete Datenverarbeitungsgeräte verursacht Aufwand, der im geschäftlichen Bereich Kosten und im privaten Bereich Unbequemlichkeit nach sich zieht. Des weiteren besteht die Gefahr von Übertragungsfehlern. Insbesondere Inhalte von Überweisungsaufträgen, wie Kontonummern und Nummern zur Identifikation der Bank sowie gegebenenfalls Nummern zum Verwendungszweck, dürfen nicht die geringste Abweichung haben, da andernfalls die gesamte Transaktion nicht zustande kommen kann.

Die wachsende Verbreitung von Online-Banking führt zunehmend dazu, daß geschäftliche und private Bankkunden die Inhalte von Überweisungsaufträgen oder die auf Rechnungen vermerkten Daten mit den oben beschriebenen Nachteilen manuell in den Computer übertragen. Überweisungen müssen in der Regel einzeln und daher aufwendig eingegeben werden. Andere, weit verbreitete, teilweise leichter verfügbare Geräte, wie Mobiltelefone und PDAs können für die Durchführung von Überweisungen nur mit Komforteinbußen eingesetzt werden, da die Eingabe von Daten über die kleine Tastatur vergleichsweise unbequem ist.

Dies führt auch für die Zahlungsempfänger zu Nachteilen, da Überweisungen aus Gründen der Bequemlichkeit oder der arbeitsorganisatorischen Sammlung größerer Rechnungskontingente verzögert durchgeführt werden.

Des weiteren ergibt sich im geschäftlichen und privaten Bereich die Notwendigkeit, Dokumente wie Ausschreibungen, Angebote, Auftragserteilungen, Auftragsbestätigungen, Verträge und Rechnungen zu vergleichen. Dabei sind insbesondere die Beträge und die zugehörigen Leistungen abzugleichen. Gegebenenfalls kann auch ein erneuter Abgleich der Allgemeinen Geschäftsbedingungen erforderlich sein. Dieser Vergleich ist arbeitsaufwendig und kann zu Fehlern führen. Insbesondere in Unternehmen führt er zu personellem Aufwand und Kosten.

Überweisungsaufträge, die Banken in Papierform weitergeleitet werden, müssen in geeigneter Weise automatisiert für die weitere, elektronische Datenverarbeitung eingelesen werden. Das automatisierte Einlesen der gegebenenfalls vom Überweisungsempfänger bereits in die Überweisungsformulare gedruckten Daten und der in vielen Fällen handschriftlich eingetragenen Daten des Einzahlers ist fehleranfällig. Auch bei einer relativ kleinen Fehlerrate entstehen erhebliche Zusatzaufwande zur Nacharbeitung der fehlerhaften Daten.

Es ist selbstverständlich bekannt, Rechnungsdaten und dergleichen über Datenfernübertragung wie beispielsweise E-Mail, Internet oder Intranet von einem Rechnungssteller zu einem Rechnungsempfänger bzw. einem Zahlungsempfänger zu einem Zahlungsschuldner zu übertragen. Jedoch ist es aus vielfältigen Gründen, beispielsweise Anforderungen der Finanzverwaltung bezüglich Geltendmachung von Mehrwertsteuer, erforderlich, zumindest ein Original-Rechnungsdokument in gedruckter Papierform an den Rechnungsempfänger zu übermitteln. Die zusätzliche Übermittlung der für die Begleichung der Rechnung, d.h. die Ausführung der Zahlungstransformation erforderlichen Daten wie Kundennummer, Rechnungsnummer, Konteninformation, Bankleitzahlen, IBAN etc. des Zahlungsempfängers über Datenfernübertragung zusätzlich zum Versenden des gedruckten Rechnungsdokumentes stellt daher einen Zusatzaufwand dar. Außerdem besteht beim Rechnungsempfänger die Schwierigkeit der richtigen Zuordnung von gedrucktem Rechnungsdokument sowie elektronisch übermittelten Rechnungsdaten.

Der Erfindung liegt daher die technische Aufgabe zugrunde, ein Verfahren zur Rechnungserstellung und -begleichung von einem Zahlungsschuldner an einen Zahlungsempfänger vorzuschlagen, das eine automatisierte Bearbeitung sowohl durch den Rechnungssteller als auch durch den Zahlungsschuldner ermöglicht, den Aufwand auf beiden Seiten sowie die Fehleranfälligkeit verringert.

### Zusammenfassung der Erfindung

Gelöst wird die Aufgabe durch ein Verfahren zur automatisierten Erstellung und Bearbarbeitung eines Rechnungsdokuments zur Ausführung eines Zahlungsvorgangs von einem Zahlungsschuldner an einen Zahlungsempfänger aufweisend die Schritte der Erfassung der zur Ausführung des Zahlungsvorgangs zur Rechnungsbegleichung notwendigen Rechnungsdaten, Erstellung und Ausdrucken eines Rechnungsdokuments, Anbringen eines Speicherelements an dem Rechnungsdokument, Abspeichern der Rechnungsdaten in dem Speicherelement, Versenden des Rechnungsdokuments mit Speicherelement an den Zahlungsschuldner, Auslesen der Rechnungsdaten von dem Speicherelement durch ein Lesegerät, Übertragung der ausgelesenen Rechnungsdaten an ein automatisiertes Zahlungsverkehrssystem und Ausführung des Zahlungsvorgangs an den Zahlungsempfänger basierend auf den ausgelesenen Rechnungsdaten.

Das erfindungsgemäße Verfahren ermöglicht es dem Rechnungssteller, in einem Arbeitsvorgang ein gedrucktes Rechnungsdokument zu erstellen sowie gleichzeitig digital weiterverarbeitbare Rechnungsdaten zu diesem Rechnungsdokument zu erzeugen und zu versenden. Der Rechnungsempfänger/Zahlungsschuldner kann das Rechnungsdokument gegebenenfalls prüfen, für die Finanzbuchhaltung abheften und mit einem geeigneten Lesegerät die zur Ausführung des Zahlungsvorgangs benötigten Daten auf einfache Art und Weise auslesen. Der Arbeitsaufwand kann sowohl auf der Seite des Rechnungsstellers/Zahlungsempfängers als auch beim Rechnungsempfänger/Zahlungsschuldner verringert werden. Außerdem kann die Fehlerhäufigkeit reduziert werden.

Ferner schlägt die Erfindung ein Verfahren zur automatisierten Erstellung eines Rechnungsdokuments aufweisend Schritte der Erfassung der zur Ausführung eines Zahlungsvorgangs zur Rechnungsbegleichung notwendigen Rechnungsdaten, Erstellung und Ausdrucken eines Rechnungsdokuments, das die Rechnungsdaten in gedruckter Form enthält, Anbringen eines Speicherelements an dem Rechnungsdokument, und Abspeichern der Rechnungsdaten in dem Speicherelement vor.

Weiterhin schlägt die Erfindung ein Rechnungsdokument vor, das für die Ausführung eines Zahlungsvorgangs zur Rechnungsbegleichung notwendigen Rechnungsdaten in gedruckter Form enthält und ein am Rechnungsdokument angebrachtes Speicherelement aufweise, auf dem Rechnungsdaten in digital weiterverarbeitbarer Form abgespeichert sind.

Die in dem Speicherelement enthaltenen Daten können mittels eines geeigneten Lesegeräts ausgelesen und durch einen Computer, ein Computersystem oder andere digitale Endgeräte wie ein Telefon, Mobiltelefon oder einen PDA eingelesen und weiterverarbeitet werden. Der Zahlungsvorgang kann durch ein geeignetes Transaktionssystem wie ein Online-Banking-System, ein Telefonbanking-System oder ähnlichem erfolgen.

Außerdem kann vorgesehen sein, dass der Zahlungsschuldner mit einem geeigneten Schreibegerät einen Freigabecode und/oder eigene Bankkonteninformation auf das vorhandene Speicherelement oderauf ein zweites Speicherelement schreibt, das dem ersten Speicherelement hinzugefügt wird oder der Rechnung ein von der Bank vorbereitetes Speicherelement mit seinen Daten hinzufügt. Die Rechnung oder alternativ nur die Speicherelemente können dann an eine Bank weitergeleitet werden, die die Zahlungstransaktion ausführt.

Bei dem Speicherelement kann es sich vorzugsweise um einen sogenannten RFID (Radio Frequency Identification)-Chip handeln, der mit einem an sich bekannten Datenschreibgerät mit Daten permanent beschreibbar ist. Diese Daten können berührungslos per Funk wieder ausgelesen werden. Ein RFID-Chip kann dabei eine eigene Stromversorgung aufweisen oder alleine mit der Energie der Auslesestrahlen arbeiten. Es kann sich um schreibgeschützte Nurlese-Speicher oder um wiederbeschreibbare Speicher handeln. Andere Speichereinrichtungen, die eine geringe Dicke aufweisen und sich leicht an einem Rechnungsdokument anbringen lassen, können selbstverständlich im Rahmen der Erfindung ebenso verwendet werden.

Das Speicherelement kann dabei auf dem Rechnungsdokument aufgeklebt oder in dieses einlaminiert werden. Um eine Bearbeitung in einem Rechnungsstapel zu erleichtern, wird beim Vorgang des Aufbringens der Speicherelemente die Position der Speicherelemente an aufeinanderfolgenden Rechnungsdokumenten vorzugsweise variiert.

Mittels Perforation oder dergleichen kann auf dem Rechnungsdokument ein Abrissbereich für das Speicherelement vorgesehen sein, der ein einfaches Entfernen des Speicherelements zum Versenden desselben erleichtert.

Zur Erhöhung der Datensicherheit können die in dem Speicherelement abgespeicherten Daten mittels einer Datenverschlüsselung oder einem Passwort geschützt sein. Dabei kann das Passwort auf dem Rechnungsdokument ausgedruckt sein, so dass das Auslesen der Daten ein Öffnen eines Briefumschlages erforderlich macht, in dem das Rechnungsdokument versandt wird.

Vorzugsweise kann ein Computersystem des Zahlungsschuldners ausgebildet sein, die von dem Speicherelement des Rechnungsdokuments ausgelesenen Daten mit zugeordneten abgespeicherten Daten zu vergleichen, die vorher aus Angeboten, Ausschreibungen, Auftragserteilungen, Auftragsbestätigungen, Verträgen, Allgemeinen Geschäftsbedingungen oder dergleichen erfasst wurden.

Bei dem Rechnungsdokument kann es sich beispielsweise auch um ein sogenanntes Überweisungsformular handeln, bei dem die zur Ausführung einer Überweisung erforderliche Information des Zahlungsempfängers bereits vorgedruckt vorhanden ist.

### Kurzbeschreibung der Zeichnungen

Die Erfindung wird im Folgenden anhand eines bevorzugten Ausführungsbeispiels unter Bezugnahme auf die beiliegenden Zeichnungen näher erläutert.
- Figur 1: zeigt ein erstes Beispiel einer Hardware-Konfiguration zur Ausführung des erfindungsgemäßen Verfahrens.
- Figur 2: zeigt ein zweites Beispiel einer Hardware-Konfiguration zur Ausführung des erfindungsgemäßen Verfahrens.
- Figur 3: ist ein Flussdiagramm, welches schematisch die Verfahrensschritte eines Ausführungsbeispiels des erfindungsgemäßen Verfahrens zur Herstellung eines Rechnungsdokuments zeigt.
- Figur 4: ist ein Flussdiagramm, das schematisch die Verfahrensschritte eines Ausführungsbeispiels eines erfindungsgemäßen Verfahrens.
- Figur 5: ist ein Flussdiagramm, das schematisch die Verfahrensschritte eines weiteren Ausführungsbeispiels eines erfindungsgemäßen Verfahrens.
- Figur 6: zeigt schematisch den Verfahrensablauf eines Ausführungsbeispiels des erfindungsgemäßen Verfahrens.
- Figur 7: zeigt schematisch ein Ausführungsbeispiel eines erfindungsgemäßen Rechnungsdokuments.
- Figur 8: erläutert schematisch einen Schritt der Erstellung eines Rechnungsdokuments gemäß einem Ausführungsbeispiel der Erfindung.
- Figur 9: zeigt schematisch den Schritt des Auslesens und der Verarbeitung von Daten von einem mit Speicherelement versehenen erfindungsgemäßen Rechnungsdokument.

- Figur 10: zeigt schematisch den Schritt der Weiterverarbeitung der Daten bei einer Bank gemäß einem Ausführungsbeispiel der Erfindung.

### Detaillierte Beschreibung von Ausführungsbeispielen

Gedruckte Rechnungen oder Überweisungsaufträge/Zahlscheine werden erfindungsgemäß mit einem elektrischen Schaltkreis, einem RFID (Radio Frequency Identification) -Chip versehen. In dem RFID-Chip sind die relevanten Daten wie insbesondere die Kontoverbindung des Zahlungsempfängers, die Währung, der Betrag und der Verwendungszweck sowie ggf. weitere Inhalte der Rechnung wie die Beschreibung der erbrachten/zu erbringenden Leistung gespeichert. In Computern, PDAs, Festnetztelefonen und/oder Mobiltelefonen werden Leseeinheiten installiert, die die Informationen in den RFID-Chips zur weiteren elektronischen Verarbeitung auslesen können. Die Daten werden per Funk übertragen. Die Formate der übertragenen Daten sind bevorzugt zu standardisieren. Die Daten werden in dem Computer, Mobiltelefon oder PDA in geeigneter Weise weiterverarbeitet, zum Beispiel in Überweisungsmasken für das Online-Banking oder in Datenverarbeitungssysteme von Unternehmen übertragen.

Gegebenenfalls sollte eine Stapelverarbeitung mehrerer Rechnungen und/oder Zahlscheine möglich sein. Dazu sind soweit notwendig die RFID-Chips an variierenden Stellen der Rechnungen zu positionieren, um eine gegenseitige Beeinflussung zu vermeiden. Rechnungsdaten können mit den Daten in in gleicher Weise mit RFID-Chips ausgestatteten Angeboten, Auftragserteilungen und Auftragsbestätigungen verglichen werden. Überweisungsaufträge, die in Papierform an Banken weitergeleitet werden, können mittels der in den RFID-Chips gespeicherten Daten in die Datenverarbeitungssysteme der Banken eingespeist werden. Die Ergänzung der Überweisungsaufträge um die Daten des Einzahlers kann ebenfalls über einen RFID-Chip erfolgen, den der Einzahler auf dem Überweisungsauftrag aufbringt.

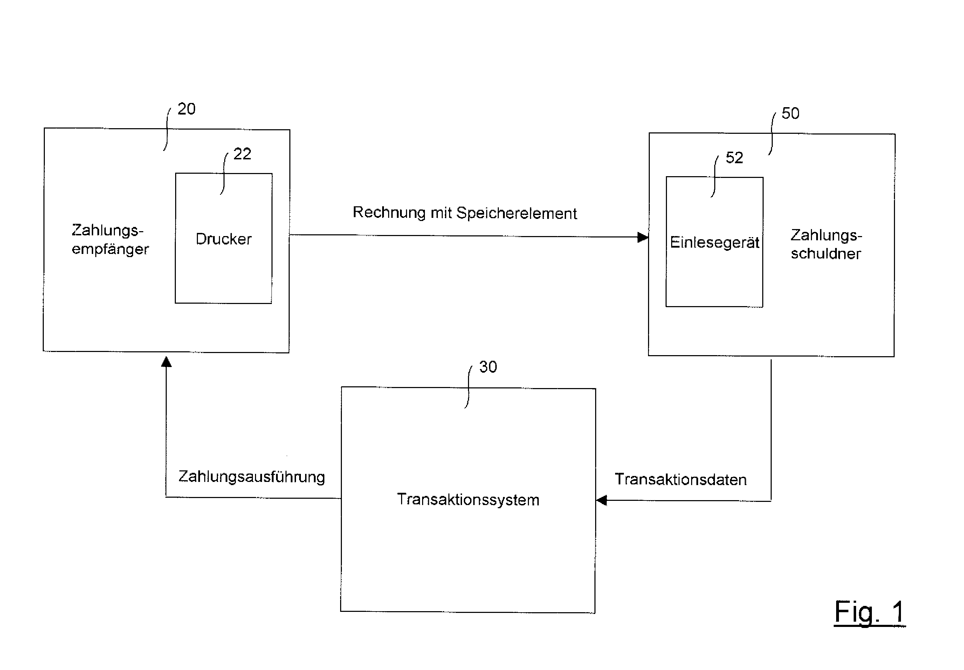

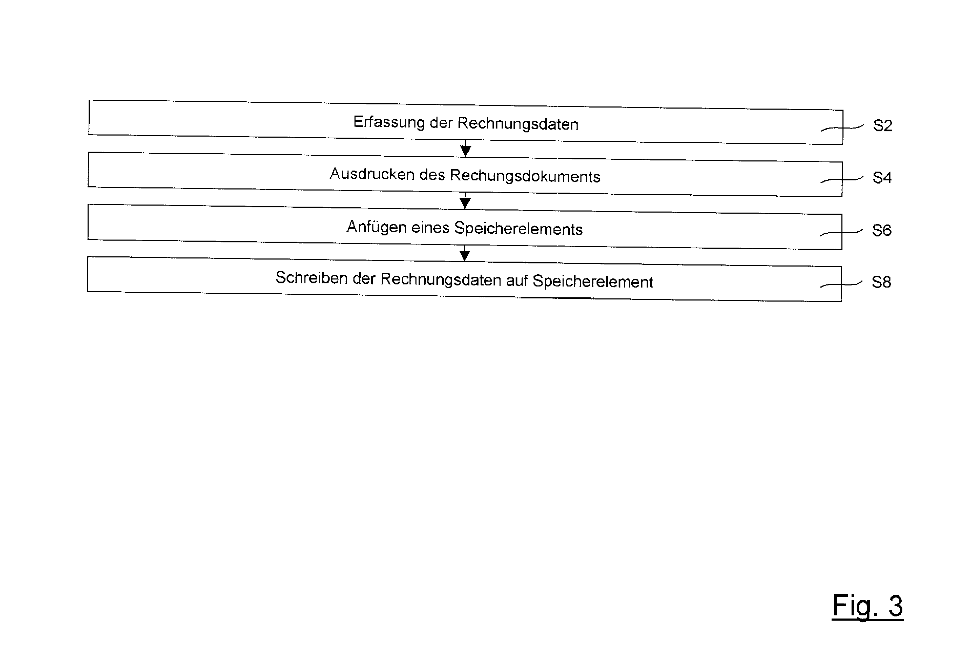

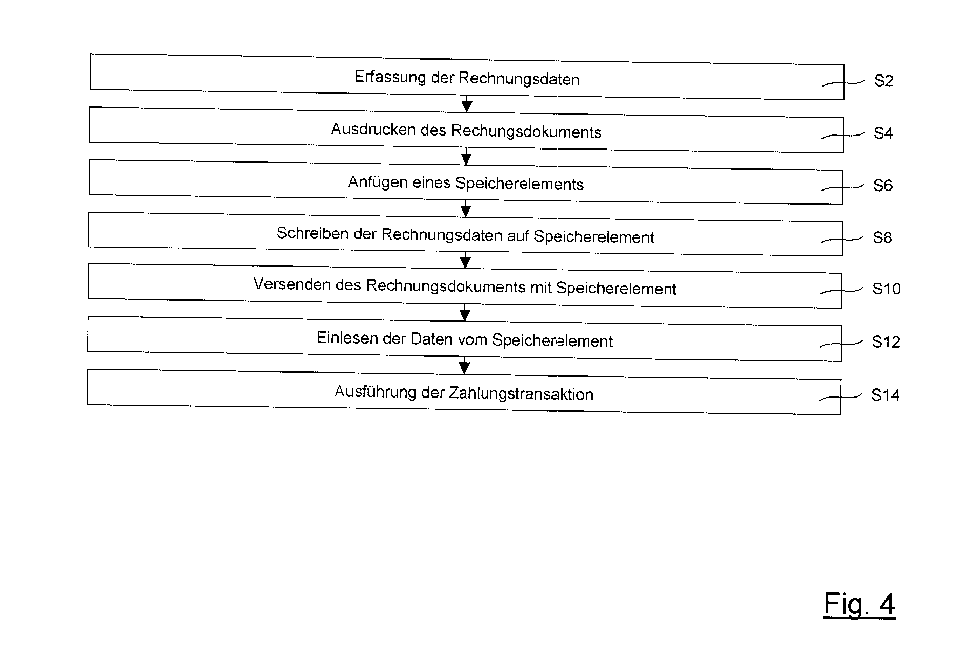

Figur 1 zeigt schematisch ein erstes Beispiel einer Hardware-Konfiguration zur Ausführung der Erfindung. Figur 3 ist ein Flussdiagramm, das schematisch die Verfahrensschritte eines Ausführungsbeispiels des erfindungsgemäßen Verfahrens zur Erstellung eines Rechnungsdokuments zeigt und Figur 4 ist ein Flussdiagramm eines ersten erfindungsgemäßen Ausführungsbeispiels des Verfahrens zur Rechnungserstellung und -begleichung entsprechend der Konfiguration von Fig.1.

Das Computersystem 20 eines Zahlungsempfängers erfasst in Schritt S2 in Fig. 3 und 4 die für die Erstellung einer Rechnung notwendigen Rechnungsdaten, wie Person und Adresse des Rechnungsempfängers, Kundennummer, Rechnungsnummer, Empfängerkonteninformation usw. und druckt mit Hilfe eines Druckers 22 oder dergleichen in einem darauffolgenden Schritt S4 das Rechnungsdokument aus. Es kann sich dabei um ein individuelles Rechnungsdokument, ein Rechnungsformular oder auch eine Rechnung mit beigefügtem Überweisungsträger handeln. In einem darauf folgenden Verfahrensschritt S6 wird ein Speicherelement, wie vorzugsweise ein RFID-Chip, an das Rechnungselement durch Aufkleben, Laminieren oder auf andere geeignete Weise angebracht. Dann werden im Verfahrensschritt S8 die Rechnungsdaten, d.h. die zur Durchführung des Zahlungsvorgangs erforderlichen Daten, auf das Speicherelement geschrieben. Die Verfahrensschritte S4, S6 und S8 können auch in anderer als in der den Figuren gezeigten Reihenfolge oder auch parallel zueinander ausgeführt werden.

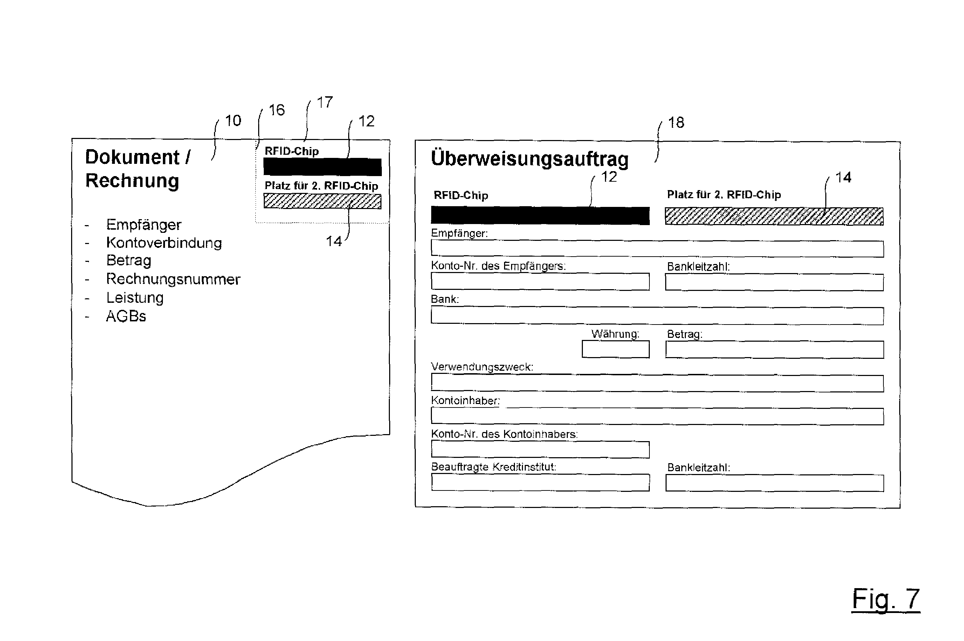

Die Rechnung 10 mit Speicherelement 12 (siehe Fig. 7) wird dann per Post, Kurier etc. an den Rechnungsempfänger oder Zahlungsschuldner gesandt (Schritt S10). Dieser weist ein geeignetes Lesegerät 52 auf, mit dem der auf dem Speicherelement 12 gespeicherte Inhalt in Schritt S 12 in Fig. 4 ausgelesen und auf ein Computersystem 50 übernommen werden kann. Dabei kann es sich um ein Buchhaltungssystem eines Unternehmens, einen PC oder auch einen Organizer oder ein Mobiltelefon handeln. Die eingelesenen Transaktionsdaten werden an ein Transaktionssystem 30, wie ein Online-Banking-System oder ein Telefobanking-System, übermittelt, welches die Zahlung ausführt, d.h. den Betrag von dem bestimmten Konto des Zahlungsschuldners 50 abbucht und dem Zahlungsempfänger 20 gutschreibt (siehe Schritt S14 in Fig. 4).

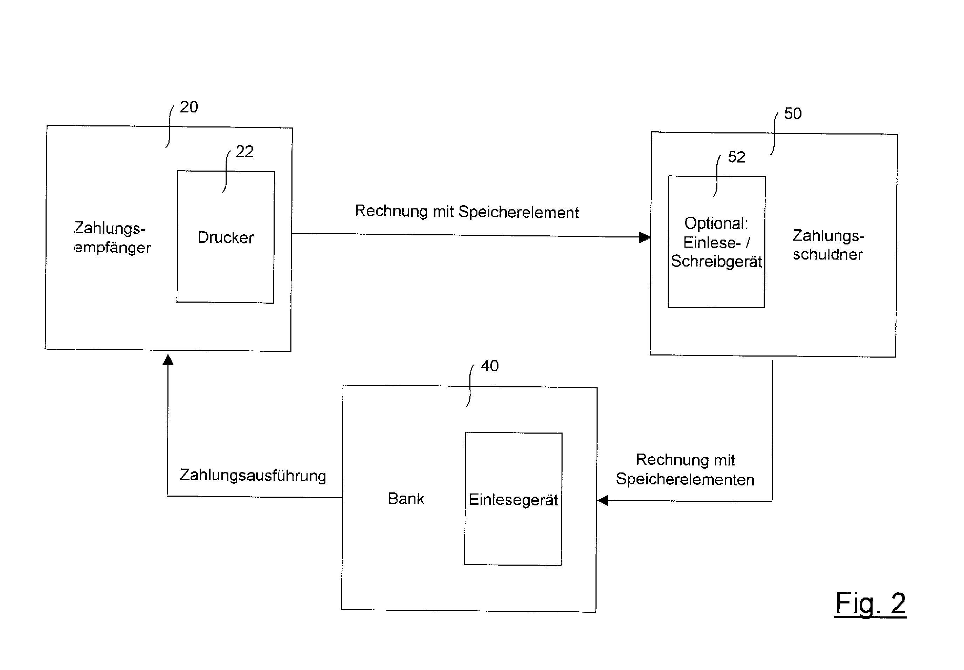

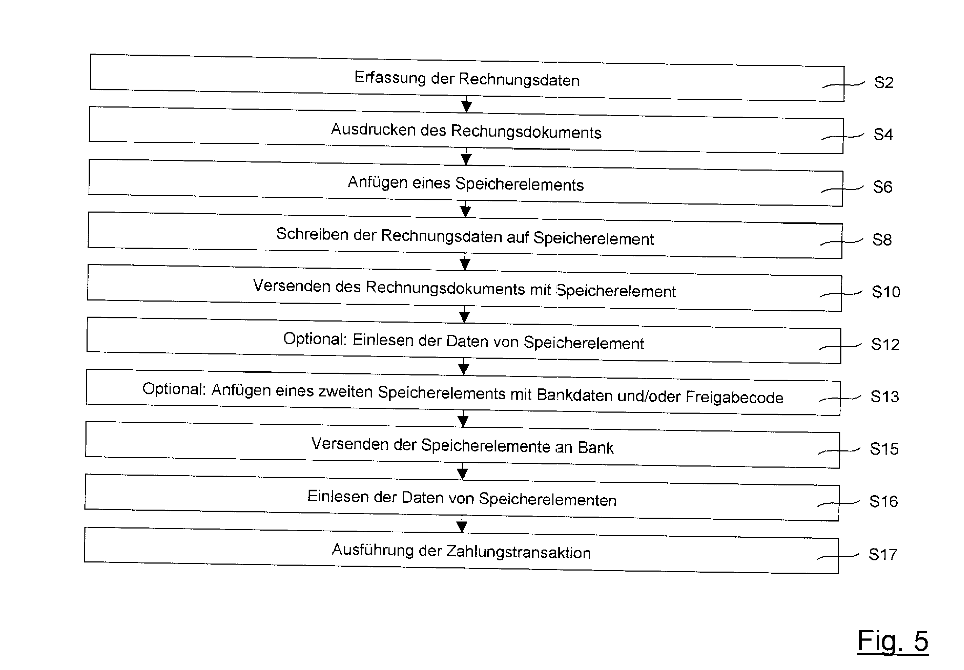

Fig. 2 zeigt ein zweites Beispiel einer Hardware-Konfiguration zur Ausführung eines zweiten Ausführungsbeispiels des erfindungsgemäßen Verfahrens, welches in Fig. 5 erläutert ist.

Der Vorgang der Erstellung des Rechnungsdokuments entspricht dem oben unter Bezugnahme auf Fig. 3 erläuterten Ausführungsbeispiel und wird nicht weiter erläutert. In Schritt S12 werden durch ein Lesegerät 52 die Daten vom Speicherelement 12 eingelesen. Wenn der Zahlungsschuldner entscheidet, dass die Rechnungsdaten korrekt sind und die Rechnung beglichen werden soll, kann optional entweder auf das bestehende Speicherelement ein Freigabecode geschrieben oder dem Rechnungsdokument 10 ein zweites Speicherelement 14 angefügt werden, welches einen Freigabecode und/oder Konteninformation des Zahlungsschuldners enthält (Schritt S13 in Fig. 5). Daraufhin wird im Verfahrensschritt S15 das Rechnungsdokument mit den beiden Speicherelementen oder auch die beiden Speicherelemente alleine an eine Bank 40 verschickt, wo dann in Schritt S16 die auf den Speicherelementen gespeicherten Daten ausgelesen werden und im abschließenden Schritt S17 die Zahlungstransaktion ausgeführt wird.

Rechnungen werden mit RFID-Chips ausgestattet, auf denen alle relevanten Informationen, wie zum Beispiel die Kontoverbindung des Zahlungsempfängers, die Währung, der Betrag und der Verwendungszweck sowie ggf. weitere Inhalte der Rechnung wie die Beschreibung der erbrachten/zu erbringenden Leistung, gespeichert sind. Der RFID-Chip kann ergänzend zu oder als Ersatz/Alternative eines bereits teilweise ausgefüllten Überweisungsauftrages verwendet werden. Die Daten werden bei Erstellung der Rechnung per Funk in den RFID-Chip übertragen.

Der RFID-Chip besteht insbesondere aus einer Antenne und einem Mikrochip, in dem die Informationen gespeichert werden. Der Chip kann als ROM ausgelegt werden, um nachträglichen Änderungen vorzubeugen. Der RFID-Chip kann in das Papier eingearbeitet sein oder als Etikett / Smart Label auf das Papier aufgebracht/aufgeklebt werden.

Computer, Mobiltelefone, PDAs oder andere, zur elektronischen Datenverarbeitung geeignete Geräte werden mit einem Lesegerät ausgestattet. Dieses kommuniziert mit dem RFID-Chip. Verfügt der RFID-Chip über keine eigene Stromversorgung, führt das Lesegerät dem RFID-Chip die erforderliche Energie über Funkwellen induktiv zu. RFID-Chips sind im Regelfall inaktiv. Erst durch induktive Zuführung der Energie oder ein spezielles Aktivierungssignal werden die im RFID-Chip gespeicherten Daten gesendet.

Das Lesegerät empfängt die Daten und leitet diese an die Recheneinheit/CPU des Computers, Mobiltelefons oder PDAs weiter. Die Daten können verschlüsselt und/oder standardisiert sein. In dem Computer oder vergleichbaren Gerät werden die Daten weiterverarbeitet. Zum Beispiel können sie in die Überweisungsmaske für das Online-Banking übertragen und dort angezeigt werden. Dies kann durch Auslösen eines entsprechenden Befehls z.B. durch Klicken auf einen Button in der Überweisungsmaske erfolgen.

Des Weiteren können die aus dem RFID-Chip ausgelesenen Daten gespeichert und/oder der weiteren Datenverarbeitung zum Beispiel für die Buchhaltung zugeführt werden. Insbesondere können Daten zum Vergleich mit anderen Dokumenten eingelesen, gespeichert und weiterverarbeitet werden. Dies betrifft insbesondere Dokumente wie Ausschreibungen, Angebote, Auftragserteilungen, Auftragsbestätigungen, Verträge und Rechnungen, aber auch Allgemeine Geschäftsbedingungen. Auf diese Weise kann die Bearbeitung im Verlauf einer Ausschreibung oder Vertragsbeziehung zustande kommenden Dokumente vereinfacht werden. In diesem Fall ist es hilfreich, die im RFID-Chip gespeicherten Daten bei Abweichungen vom gedruckten Text als relevanten Vertragsbestandteil zu definieren.

Eine Standardisierung der im RFID-Chip gespeicherten Daten erleichtert die Weiterverarbeitung. Die Daten können zum Beispiel in immer gleicher Reihenfolge, in immer gleichen Strukturen und/oder mit immer gleichen Bezeichnungen für die Parameter/Datenfelder gespeichert werden. Ebenfalls möglich ist ein vollständiger Dokumentenvergleich.

In Abhängigkeit von der Art des Dokumentes kann eine Verschlüsselung der auf dem RFID-Chip gespeicherten Daten oder eines Teils der Daten vorteilhaft sein. Überweisungsaufträge werden in der Regel nicht verschlüsselt sein, um eine problemlose Bearbeitung durch den Rechnungsempfänger sicherzustellen. Weitergehende Beschreibungen des Verwendungszweckes und/oder der zu erbringenden/erbrachten Leistung können jedoch verschlüsselt werden, um zum Beispiel Banken keine vertiefenden Informationen zuzuleiten. In diesem Fall müssen Absender und Empfänger der Dokumente/Rechnungen auf geeignete Weise Zusatzinformationen zur Entschlüsselung, zum Beispiel Passworte oder Daten zur Kryptographie austauschen. Diese können gegebenenfalls in die Software zum Einlesen, Auslesen und Bearbeiten der Informationen gespeichert werden, um eine vereinfachte Abwicklung zu ermöglichen.

Um eine störungsfreie Stapelverarbeitung von Dokumenten, also das gleichzeitige Einlesen mehrerer Rechnungen zu ermöglichen, sollten soweit notwendig, um Störungen zwischen den Chips auszuschließen, die RFID-Chips an variierenden Stellen des Dokumentes angebracht werden. Dies kann nach dem Zufallsprinzip oder nach festen Parametern, zum Beispiel in Abhängigkeit von dem Anfangsbuchstaben des Zahlungsempfängers, erfolgen.

Mit RFID-Chip ausgestattete Überweisungsaufträge, die Banken in Papierform zugeleitet werden, können von den Banken ebenfalls durch Auslesen der im RFID-Chip gespeicherten Informationen in deren elektronischen Datenverarbeitungssysteme übertragen werden. Dabei kann es zweckmäßig sein, die Einzahler mit RFID-Chips auszustatten, die ihre Kontoverbindung beinhalten. Die Einzahler bringen dann den zweiten RFID-Chip mit ihren Kontodaten auf dem Überweisungsauftrag auf. Alternativ können in Computer und dergleichen Schreibeinheiten für Einzahler integriert werden, mit der die Einzahler RFID-Chips mit den erforderlichen Daten beschreiben.

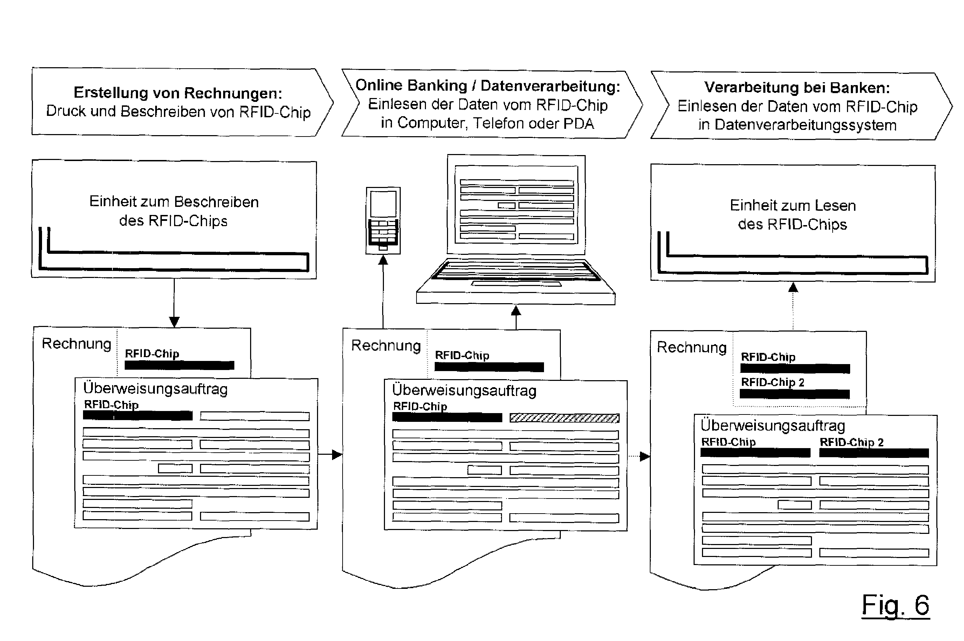

Fig. 6 zeigt schematisch den gesamten Prozeß der Bearbeitung und Datenverarbeitung von Rechnungen und Überweisungsaufträgen. RFID-Chips werden mittels schwarzer Flächen dargestellt. Schraffierte Flächen zeigen Bereiche, in denen nachträglich RFID-Chips zugefügt werden können. Antennen von Sende- und Empfangseinheiten werden mittels dickerer Linien in den entsprechenden Geräten und technischen Einheiten symbolisiert. Gestrichelte Pfeile zeigen alternative Abläufe, soweit der Einzahler keine elektronische Datenverarbeitung zur Durchführung der Überweisung einsetzt.

Die Erfindung beinhaltet ein Verfahren, insbesondere auf Rechnungen oder Überweisungsaufträgen/Zahlscheinen gedruckte oder geschriebene Daten geeignet zu speichern, in einer einfachen, aufwandsarmen und sicheren Weise in Computer oder andere zur Datenverarbeitung geeignete elektronische Geräte einzulesen und weiterzuverarbeiten. Der technische Ablauf wird anhand der Bilder im folgenden beschrieben:
Wie auf Fig. 6 zu sehen, besteht der Ablauf aus drei Schritten:
   - Schreiben der Daten in einen auf einem Dokument befestigten RFID-Chip
   - Auslesen der Daten in einen Computer, ein (Mobil-)Telefon oder einen PDA sowie deren elektronische Weiterverarbeitung
   - alternativ zum zweiten Schritt Auslesen der Daten aus dem RFID-Chip in ein Datenverarbeitungssystem von Banken.

RFID (Radio Frequency Identification) ist ein Verfahren, Daten ohne die Erfordernis einer Berührung oder eines Sichtkontaktes zu übertragen.

Fig. 7 zeigt das Beispiel für eine gedruckte Rechnung 10 und einen gedruckten Überweisungsauftrag 18. Der RFID-Chip 12 kann entweder auf der Rechnung oder dem Überweisungsauftrag befestigt werden. Im ersten Fall kann wahlweise auf den gedruckten Überweisungsauftrag verzichtet werden. Es kann eine Perforation 16 vorhanden sein, der einen Abrissbereich bildet und so ein Entfernen des RFID-Chips vom Rechnungsdokument 10, 18 erleichtert.

Der RFID-Chip kann in das Papier der Dokumente integriert oder äußerlich zum Beispiel durch Kleben (Smart Label) aufgebracht werden. In beiden Fällen sollte der RFID-Chip möglichst dünn und flexibel sein, um eine für Papier gängige Behandlung beschädigungslos überstehen zu können. Von Vorteil ist, wenn der RFID-Chip in etwa die gängige Dicke von Papier, also ca. 0,1 mm einhält. Dies erleichtert insbesondere das Bedrucken mit gängigen Druckern.

Die auf den Dokumenten geschriebenen oder gedruckten Daten werden, soweit relevant, auf den RFID-Chip gespeichert. Der RFID-Chip ist ein Transponder. Er besteht in der Regel aus einem Mikrochip mit elektrischen Schaltkreisen und einem permanenten Speicher, einer mit dem Mikrochip verbundenen Antenne und einem Träger oder Gehäuse. Aktive Transponder verfügen zusätzlich über eine eigene Energiequelle wie z.B. eine Batterie oder ein Akku. Bei den Schaltkreisen des RFID-Chips handelt es sich in der Regel um einen analogen Schaltkreis zum Empfangen und Senden und um einen digitalen Schaltkreis. Die Speicher können mehrfach beschreibbar sein; dies dürfte jedoch bei den hier behandelten Anwendungen im Regelfall unvorteilhaft sein, da andernfalls nachträgliche Manipulationen möglich wären. Des weiteren können Kryptographiebausteine integriert werden.

Das Auslesen und Schreiben der Informationen erfolgt mittels Radiowellen, bei niedrigen Frequenzen induktiv über ein Nahfeld, bei höheren Frequenzen elektromagnetisch über ein Fernfeld. Für die hier beschriebene Anwendung kommen insbesondere sogenannte passive RFID-Chips ohne eigene Energieversorgung in Frage, da sie kostengünstiger, kleiner und leichter sind. Der Nachteil der geringeren Reichweite spielt beim Auslesen von Dokumenten in einen Computer oder ein sonstiges Datenverarbeitungssystem eine untergeordnete Rolle. Passive RFID-Chips erhalten ihre Versorgungsspannung durch Induktion aus den Funksignalen der Basisstation, also der Einheiten zum Schreiben und Auslesen.

Der RFID-Chip kann insbesondere als Etikett, ein sogenanntes Smart Label hergestellt werden. In diesem Fall sind der Transponder inklusive der Antenne auf einer Folie aufgebracht, die auf Spulen gewickelt, wie Papier weiterverarbeitet, in Papierschichten einlaminiert oder auf Papier aufgeklebt werden kann.

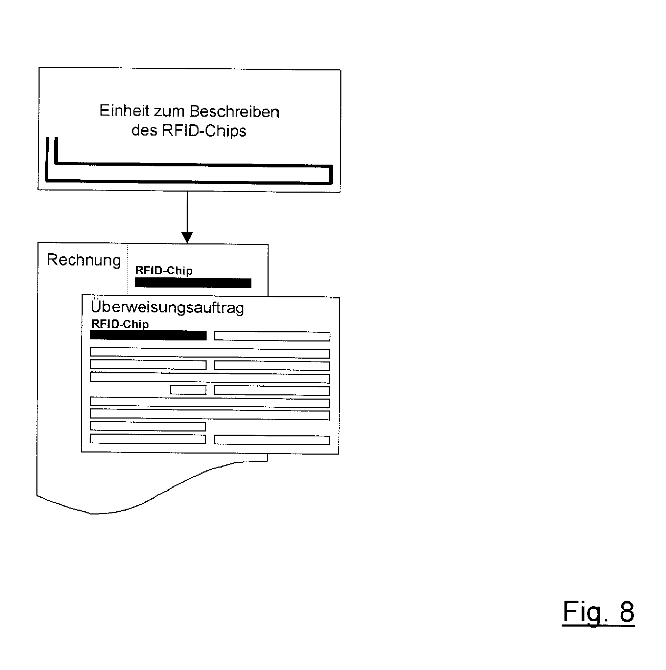

Fig. 8 zeigt den Vorgang, bei dem der RFID-Chip beschrieben wird. Die Einheit zum Beschreiben des RFID-Chips überträgt die Daten via Funk/Radiowellen. Die Radiowellen dienen außerdem dazu, dem RFID-Chip erforderlichenfalls Energie zuzuführen. Zum Übertragen der Daten kann zum Beispiel eine Sendeantenne in einen Drucker integriert werden. Auf diese Weise kann in einem Arbeitsgang beim Drucken des Textes auch der RFID-Chip beschrieben werden, indem das Papier mit dem RFID-Chip an der Sendeantenne im Zuge des Druckvorganges vorbeigleitet.

Im Interesse geringer Kosten, geringen Gewichtes und geringer Dimensionen sollte der RFID-Chip möglichst klein sein. Dies kann die Kapazität des Speichers begrenzen. Insbesondere bei der Konzentration auf die für eine Überweisung relevanten Daten können kleine und kostengünstige RFID-Chips zum Einsatz kommen. Des weiteren sollten die Daten selbst auf ein Minimum reduziert, gegebenenfalls komprimiert und möglichst standardisiert sein. Zum Beispiel können die Daten in einer standardisierten Reihenfolge abgespeichert werden, so daß anhand der Reihenfolge ersichtlich ist, welchem Parameter die jeweilige Information zuzuordnen ist. Alternativ können zum Beispiel standardisierte Bezeichnungen für die Parameter vorgesehen werden.

Optional können die Daten teilweise oder vollkommen verschlüsselt auf den RFID-Chip übertragen werden. Dies kann vorteilhaft sein, wenn die Daten oder Teile der Daten nicht von Unbefugten gelesen werden sollen. In diesem Fall sind die notwendigen Informationen wie Paßworte oder Kryptographiedaten dem Empfänger auf separatem Wege zu übermitteln.

Um dem unbefugten Auslesen von RFID-Chips auf dem Postweg vorzubeugen, sollte deren Reichweite begrenzt werden. Bedarfsweise könnte zum Beispiel als einfache Sicherheitsmaßnahme ein Passwort zum Auslesen des RFID-Chips auf das gedruckte Dokument geschrieben werden. Dieses Paßwort ist dann nur verfügbar, wenn der Brief geöffnet wird.

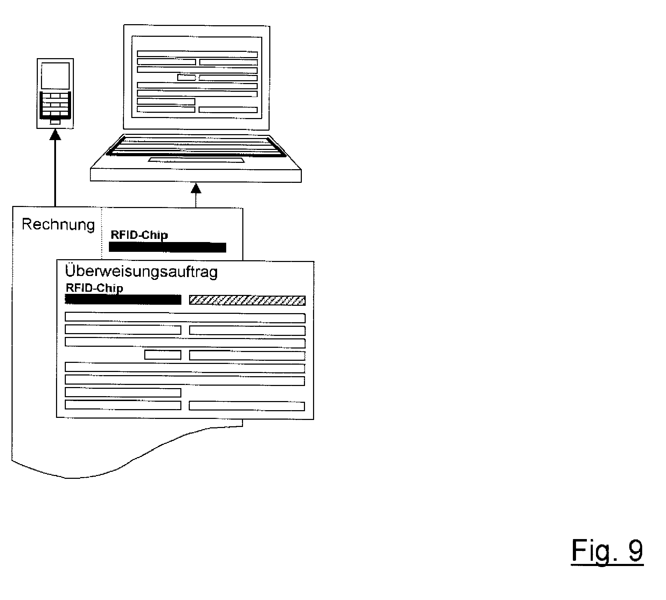

Fig. 9 zeigt die weitere Verwendung des Dokumentes durch den Empfänger, insbesondere die elektronische Datenverarbeitung. Im Falle der elektronischen Datenverarbeitung verwendet der Empfänger ein elektrisches Gerät wie zum Beispiel einen Computer, ein Mobiltelefon oder einen PDA, der mit einer Sende-Empfangs-Einheit (Reader) ausgestattet ist. Die Antenne der Sende-Empfangs-Einheit kann zum Beispiel um die Tastatur angeordnet sein.

Über die Antenne wird ein Funksignal an den RFID-Chip zur Aktivierung und gegebenenfalls zur Übertragung der erforderlichen Energie gesandt. Der RFID-Chip sendet ebenfalls per Funk die gespeicherten Informationen oder Teile der Informationen an die Sende-Empfangs-Antenne des elektrischen Datenverarbeitungsgerätes. Eine mögliche Übertragungsform ist beispielsweise gemäß Bluetooth-Standard. Von der Antenne werden die Informationen an die Recheneinheit / CPU des Computers, Mobiltelefons oder PDAs zur weiteren Verarbeitung weitergeleitet.

Zur Aktivierung des RFID-Chips, Steuerung der Datenübertragung und weiteren Datenverarbeitung können geeignete Hard-/ und/oder Softwarekomponenten eingesetzt werden. Insbesondere können die Daten durch einen vom Benutzer des Datenverarbeitungsgerätes ausgelösten Befehl in das Gerät übertragen und zum Beispiel in eine Maske für Online Banking oder ein Datenverarbeitungssystem zur Bearbeitung von Überweisungen übertragen werden. Des weiteren können die Daten archiviert, weiterbearbeitet und mit anderen Daten verglichen werden. Ein standardisiertes Daten-Format erleichtert die Verarbeitung.

Ein Vergleich der Daten kann über gängige Software zum Dokumentenvergleich oder eine spezielle Softwareanwendung erfolgen. Besonders komfortabel wäre eine Lösung, bei der neu eingelesene Daten softwaregesteuert automatisch oder auf einen Knopfdruck/Klick mit bereits gespeicherten Daten verglichen werden. Dazu können zusammengehörende Daten wie zum Beispiel Angebot, Auftragsbestätigung und Rechnung eine gemeinsame Erkennungs-ID und ggf. eine Kennzeichnung des Rechnungsstellers enthalten.

Des Weiteren sollte die Software eine Stapelverarbeitung, also das gleichzeitige Auslesen mehrerer RFID-Chips und Weiterverarbeiten der Informationen zum Beispiel in mehreren Masken für die Online-Überweisung ermöglichen, Schließlich sollte die Software gegebenenfalls die komfortable Entschlüsselung verschlüsselter Inhalte unterstützen.

Wie bereits in der Zusammenfassung der Erfindung erläutert, kann es zweckmäßig sein, die RFID-Chips an zufällig oder nach bestimmten Regeln variierenden Stellen auf dem Dokument zu positionieren, um eine gegenseitige Beeinflussung auszuschließen und damit eine störungsfreie Stapelverarbeitung zu gewährleisten.

Tätigt der Rechnungsempfänger seine Überweisung nicht auf elektronischem Wege, kann er alternativ die mit dem RDIF-Chip versehene Rechnung oder den Überweisungsauftrag an die Bank weiterleiten. Zusätzlich kann er einen weiteren RFID-Chip mit seiner eigenen Kontoverbindung und seinem Namen, zum Beispiel in Form eines Etiketts auf der Rechnung/dem Überweisungsauftrag anbringen. Alternativ kann statt der Rechnung nur ein Ausriß der Rechnung, auf dem der/die RFID-Chips befestigt sind, an die Bank weitergeleitet werden.

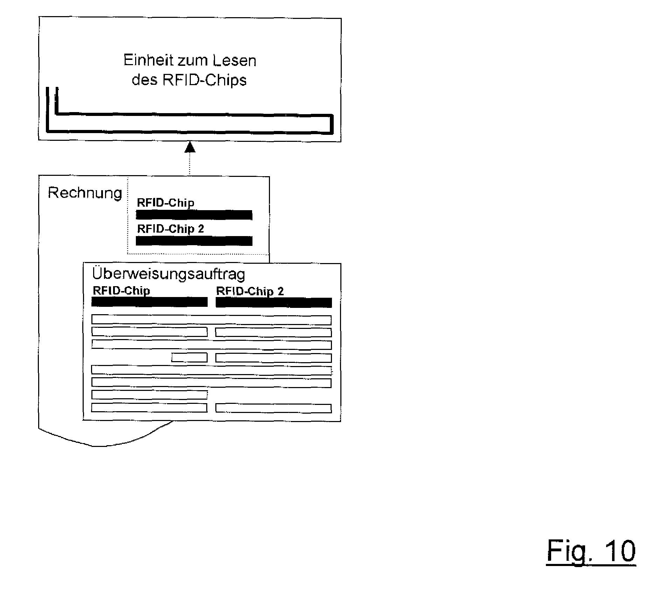

Fig. 10 zeigt den Ablauf zur Verarbeitung von Überweisungsaufträgen bei Banken. Die Daten werden mittels einer Sende-Empfangs-Einheit aus dem RFID-Chip mit den Daten des Zahlungsempfängers und gegebenenfalls aus einem zweiten RFID-Chip mit den Daten des Einzahlers ausgelesen und in das Datenverarbeitungssystem der betreffenden Bank eingespeist. Dabei gelten die gleichen technischen Bedingungen wie oben für den Fall der Online-Überweisung beschrieben, insbesondere die Möglichkeit der Stapelverarbeitung.

Das Auslesen der Daten aus RFID-Chips macht im Gegensatz zu Systemen zum Lesen geschriebener und gedruckter Überweisungsträger keine aufwendige Mechanik zum Handling des Papiers erforderlich. Gleichzeitig wird die Datenübertragung weniger fehleranfällig. Letztlich sind nicht einmal normierte Formulare für die Überweisungsaufträge erforderlich. Vielmehr kann der Kunde eine Rechnung oder Rechnungskopie mit dem die notwendigen Daten beinhaltendem RFID-Chip an die Bank übersenden. Ebenfalls möglich ist die Übersendung eines ausgerissenen Teils der Rechnung, auf dem der oder die RFID-Chips sitzen. Dieser Bereich kann zum Beispiel durch eine Perforationslinie 16 für den Abriss vorbereitet sein.

## Patentansprüche

1. Verfahren zur automatisierten Erstellung und Bearbarbeitung eines Rechnungsdokuments zur Ausführung eines Zahlungsvorgangs von einem Zahlungsschuldner (50) an einen Zahlungsempfänger (20), aufweisend die Schritte:
- Erfassung der zur Ausführung des Zahlungsvorgangs zur Rechnungsbegleichung notwendigen Rechnungsdaten,
- Erstellung und Ausdrucken eines Rechnungsdokuments (10, 18),
- Anbringen eines Speicherelements (12) an dem Rechnungsdokument,
- Abspeichern der Rechnungsdaten in dem Speicherelement (12),
- Versenden des Rechnungsdokuments (10, 18) mit Speicherelement (12) an den Zahlungsschuldner (50),
- Auslesen der Rechnungsdaten von dem Speicherelement (12) durch ein Lesegerät (52),
- Übertragung der ausgelesenen Rechnungsdaten an ein automatisiertes Zahlungsverkehrssystem (30) und Ausführung des Zahlungsvorgangs an den Zahlungsempfänger (20) basierend auf den ausgelesenen Rechnungsdaten.

2. Verfahren nach Anspruch 1, wobei wobei das automatisierte Zahlungsverkehrssystem (30) ein Online-Banking-System ist.

3. Verfahren nach Anspruch 1, wobei das automatisierte Zahlungsverkehrssystem (30) ein Telefonbanking-System ist und die auf dem Speicherelement (12) gespeicherten Daten über eine Telekommunikationsverbindung an das Telefonbanking-System übertragen werden.

4. Verfahren nach Anspruch 1, wobei durch den Zahlungsschuldner (50) ein Freigabecode auf das Speicherelement (12) eingelesen wird und das Speicherelement zur Ausführung des Zahlungsvorgangs an eine Bank (40) verschickt wird.

5. Verfahren nach Anspruch 1, wobei durch den Rechnungsschuldner (50) das Rechnungsdokument (10, 18) mit einem zweiten Speicherelement (14) versehen wird, welches einen Freigabecode und/oder Konteninformation des Zahlungsschuldners enthält, woraufhin beide Speicherelemente (12, 14) an eine Bank (40) zur Ausführung des Zahlungsvorgangs übermittelt werden.

6. Verfahren nach einem der Ansprüche 1 bis 5, wobei es sich bei dem Speicherelement (12) um einen RFID-Chip, insbesondere einen Nurlese-RFID-Chip handelt.

7. Verfahren nach einem der Ansprüche 1 bis 6, wobei das Speicherelement (12) an einem Überweisungsträger (18) angebracht wird.

8. Verfahren nach einem der Ansprüche 1 bis 7, wobei das Speicherelement (12) an das Rechnungsdokument (10, 18) angeklebt oder einlaminiert wird.

9. Verfahren nach einem der Ansprüche 1 bis 8, wobei ausgedruckte Rechnungsdokumente (10, 18) mit Speicherelementen (12) an verschiedenen Positionen auf dem Rechnungsdokument (10, 18) versehen werden.

10. Verfahren nach einem der Ansprüche 1 bis 9, wobei das Rechnungsdokument (10, 18) einen Abrissbereich (17) aufweist, an dem das Speicherelement angebracht ist.

11. Verfahren nach einem der Ansprüche 1 bis 10, wobei die auf dem Speicherelement (12) abgespeicherten Daten mit einer Datenverschlüsselung und/oder einem Passwortschutz versehen werden.

12. Verfahren nach Anspruch 11, wobei das Passwort auf dem gedruckten Rechnungsdokument (10, 18) enthalten ist.

13. Verfahren nach einem der Ansprüche 1 bis 12, wobei die auf dem Speicherelement (12) abgespeicherten Daten ein standardisiertes Datenformat, insbesondere eine bestimmte Reihenfolge einzelner Datenbestandteile aufweisen.

14. Verfahren nach einem der Ansprüche 1 bis 13, aufweisend den Schritt des Vergleichs der aus den Speicherelementen (12, 14) ausgelesenen Daten mit in einem Computersystem des Zahlungsschuldners (50) vorhandenen, aus einer Auftragsbestätigung, einem Angebot und/oder einem Auftragsschreiben oder dgl. erfassten Daten.

15. Verfahren zur automatisierten Erstellung eines Rechnungsdokuments, aufweisend die Schritte:
- Erfassung der zur Ausführung eines Zahlungsvorgangs zur Rechnungsbegleichung notwendigen Rechnungsdaten,
- Erstellung und Ausdrucken eines Rechnungsdokuments (10, 18), das die Rechnungsdaten in gedruckter Form enthält,
- Anbringen eines Speicherelements (12) an dem Rechnungsdokument, und
- Abspeichern der Rechnungsdaten in dem Speicherelement (12).

16. Rechnungsdokument (10, 18), aufweisend die für die Ausführung eines Zahlungsvorgangs zur Rechnungsbegleichung notwendigen Rechnungsdaten in gedruckter Form, **gekennzeichnet durch** ein am Rechnungsdokument (10, 18) angebrachtes Speicherelement (12), auf dem Rechnungsdaten in digital weiterverarbeitbarer Form abgespeichert sind.

17. Rechnungsdokument nach Anspruch 16, wobei es sich bei dem Rechnungsdokument (18) um einen Formularvordruck für einen Zahlungsvorgang handelt.

18. Rechnungsdokument nach Anspruch 16 oder 17, wobei das Speicherelement (12) ein RFID-Chip ist.

19. Rechnungsdokument nach einem der Ansprüche 16 bis 18, wobei das Speicherelement (12) auf das Rechnungsdokument (10, 18) aufgeklebt oder in dieses einlaminiert ist.

20. Rechnungsdokument nach einem der Ansprüche 16 bis 19, aufweisend einen Abrissbereich (17), der ein leichtes Entfernen des Speicherelements (12) ermöglicht.

21. Rechnungsdokument nach einem der Ansprüche 16 bis 20, wobei die in dem Speicherelement (12) abgespeicherten Daten mit einer Datenverschlüsselung versehen sind.

22. Rechnungsdokument nach einem der Ansprüche 16 bis 21, wobei die auf dem Speicherelement (12) abgespeicherten Daten mit einem Passwortschutz versehen sind und das Passwort auf dem Rechnungsdokument ausgedruckt ist.

23. Verfahren zur automatisierten Bearbarbeitung eines Rechnungsdokuments zur Ausführung eines Zahlungsvorgangs von einem Zahlungsschuldner (50) an einen Zahlungsempfänger (20), aufweisend die Schritte:
- Auslesen der Rechnungsdaten aus dem Speicherelement (12, 14) eines Rechnungsdokuments gemäß einem der Ansprüche 16 bis 22 durch ein Lesegerät (52),
- Übertragung der ausgelesenen Rechnungsdaten an ein automatisiertes Zahlungsverkehrssystem (30) und Ausführung des Zahlungsvorgangs an den Zahlungsempfänger (20) basierend auf den ausgelesenen Rechnungsdaten.

24. Verfahren nach Anspruch 23, aufweisend den Schritt des Vergleichs der aus den Speicherelementen (12, 14) ausgelesenen Daten mit in einem Computersystem des Zahlungsschuldners (50) bereits vorhandenen, aus einer Auftragsbestätigung, einem Angebot, allgemeinen Geschäftsbedingungen und/oder einem Auftragsschreiben oder dgl. erfassten Daten.

## Geänderte Patentansprüche

### Geänderte Patentansprüche gemäss Regel 86(2) EPÜ.

**1.** Verfahren zur automatisierten Erstellung und Bearbarbeitung eines Rechnungsdokuments für einen Zahlungsvorgang von einem Zahlungsschuldner (50) an einen Zahlungsempfänger (20), aufweisend die Schritte:
- Erfassung der zur Ausführung des Zahlungsvorgangs zur Rechnungsbegleichung notwendigen Rechnungsdaten,
- Erstellung und Ausdrucken eines Rechnungsdokuments (10, 18), das die Rechnungsdaten in gedruckter Form enthält,
- Anbringen eines Speicherelements (12) an dem Rechnungsdokument,
- Abspeichern der zur Ausführung des Zahlungsvorgangs zur Rechnungsbegleichung notwendigen Rechnungsdaten in dem Speicherelement (12), wobei diese Rechnungsdaten wenigstens eine der folgenden Rechnungsdaten Zahlungsempfänger, Kontonummer, Bankleitzahl, Kreditinstitut des Zahlungsempfängers, Betrag, Währung, Verwendungszweck und Rechnungsnummer umfassen,
- Versenden des Rechnungsdokuments (10, 18) mit Speicherelement (12) an den Zahlungsschuldner (50).

**2.** Verfahren nach Anspruch 1, ferner aufweisend die Schritte:
- Auslesen der Rechnungsdaten von dem Speicherelement (12) durch ein Lesegerät (52), und
- Übertragung der ausgelesenen Rechnungsdaten an ein automatisiertes Zahlungsverkehrssystem (30) und Ausführung des Zahlungsvorgangs an den Zahlungsempfänger (20) basierend auf den ausgelesenen Rechnungsdaten.

**3.** Verfahren nach Anspruch 2, wobei wobei das automatisierte Zahlungsverkehrssystem (30) ein Online-Banking-System ist.

**4.** Verfahren nach Anspruch 2, wobei das automatisierte Zahlungsverkehrssystem (30) ein Telefonbanking-System ist und die auf dem Speicherelement (12) gespeicherten Daten über eine Telekommunikationsverbindung an das Telefonbanking-System übertragen werden.

**5.** Verfahren nach Anspruch 1 oder 2, wobei durch den Zahlungsschuldner (50) ein Freigabecode auf das Speicherelement (12) eingelesen wird und das Speicherelement zur Ausführung des Zahlungsvorgangs an eine Bank (40) verschickt wird.

**6.** Verfahren nach Anspruch 1 oder 2, wobei durch den Rechnungsschuldner (50) das Rechnungsdokument (10, 18) mit einem zweiten Speicherelement (14) versehen wird, welches einen Freigabecode und/oder Konteninformation des Zahlungsschuldners enthält, woraufhin beide Speicherelemente (12, 14) an eine Bank (40) zur Ausführung des Zahlungsvorgangs übermittelt werden.

**7.** Verfahren nach einem der Ansprüche 1 bis 6, wobei es sich bei dem Speicherelement (12) um einen RFID-Chip, insbesondere einen Nurlese-RFID-Chip handelt.

**8.** Verfahren nach einem der Ansprüche 1 bis 7, wobei das Speicherelement (12) an einem Überweisungsträger (18) angebracht wird.

**9.** Verfahren nach einem der Ansprüche 1 bis 8, wobei das Speicherelement (12) an das Rechnungsdokument (10, 18) angeklebt oder einlaminiert wird.

**10.** Verfahren nach einem der Ansprüche 1 bis 9, wobei ausgedruckte Rechnungsdokumente (10, 18) mit Speicherelementen (12) an verschiedenen Positionen auf dem Rechnungsdokument (10, 18) versehen werden.

**11.** Verfahren nach einem der Ansprüche 1 bis 10, wobei das Rechnungsdokument (10, 18) einen Abrissbereich (17) aufweist, an dem das Speicherelement angebracht ist.

**12.** Verfahren nach einem der Ansprüche 1 bis 11, wobei die auf dem Speicherelement (12) abgespeicherten Daten mit einer Datenverschlüsselung und/oder einem Passwortschutz versehen werden.

**13.** Verfahren nach Anspruch 12, wobei das Passwort auf dem gedruckten Rechnungsdokument (10, 18) enthalten ist.

**14.** Verfahren nach einem der Ansprüche 1 bis 13, wobei die auf dem Speicherelement (12) abgespeicherten Daten ein standardisiertes Datenformat, insbesondere eine bestimmte Reihenfolge einzelner Datenbestandteile aufweisen.

**15.** Verfahren nach einem der Ansprüche 1 bis 14, aufweisend den Schritt des Vergleichs der aus den Speicherelementen (12, 14) ausgelesenen Daten mit in einem Computersystem des Zahlungsschuldners (50) vorhandenen, aus einer Auftragsbestätigung, einem Angebot und/oder einem Auftragsschreiben oder dgl. erfassten Daten.

**16.** Rechnungsdokument (10, 18), aufweisend die für die Ausführung eines Zahlungsvorgangs zur Rechnungsbegleichung notwendigen Rechnungsdaten in gedruckter Form, **gekennzeichnet durch** ein am Rechnungsdokument (10, 18) angebrachtes Speicherelement (12), auf dem die zur Ausführung des Zahlungsvorgangs zur Rechnungsbegleichung notwendigen Rechnungsdaten in digital weiterverarbeitbarer Form abgespeichert sind.

**17.** Rechnungsdokument nach Anspruch 16, wobei es sich bei dem Rechnungsdokument (18) um einen Formularvordruck für einen Zahlungsvorgang handelt.

**18.** Rechnungsdokument nach Anspruch 16 oder 17, wobei das Speicherelement (12) ein RFID-Chip ist.

**19.** Rechnungsdokument nach einem der Ansprüche 16 bis 18, wobei das Speicherelement (12) auf das Rechnungsdokument (10, 18) aufgeklebt oder in dieses einlaminiert ist.

**20.** Rechnungsdokument nach einem der Ansprüche 16 bis 19, aufweisend einen Abrissbereich (17), der ein leichtes Entfernen des Speicherelements (12) ermöglicht.

**21.** Rechnungsdokument nach einem der Ansprüche 16 bis 20, wobei die in dem Speicherelement (12) abgespeicherten Daten mit einer Datenverschlüsselung versehen sind.

**22.** Rechnungsdokument nach einem der Ansprüche 16 bis 21, wobei die auf dem Speicherelement (12) abgespeicherten Daten mit einem Passwortschutz versehen sind und das Passwort auf dem Rechnungsdokument ausgedruckt ist.

**23.** Verfahren zur automatisierten Bearbarbeitung eines Rechnungsdokuments gemäß einem der Ansprüche 16 bis 22 zur Ausführung eines Zahlungsvorgangs von einem Zahlungsschuldner (50) an einen Zahlungsempfänger (20), aufweisend die Schritte:
- Auslesen der Rechnungsdaten aus dem Speicherelement (12, 14) eines Rechnungsdokuments gemäß einem der Ansprüche 16 bis 22 durch ein Lesegerät (52),
- Übertragung der ausgelesenen Rechnungsdaten an ein automatisiertes Zahlungsverkehrssystem (30) und Ausführung des Zahlungsvorgangs an den Zahlungsempfänger (20) basierend auf den ausgelesenen Rechnungsdaten.

**24.** Verfahren nach Anspruch 2, aufweisend den Schritt des Vergleichs der aus den Speicherelementen (12, 14) ausgelesenen Daten mit in einem Computersystem des Zahlungsschuldners (50) bereits vorhandenen, aus einer Auftragsbestätigung, einem Angebot, allgemeinen Geschäftsbedingungen und/oder einem Auftragsschreiben oder dgl. erfassten Daten.
